(19)

Europäisches
Patentamt
European
Patent Office
Office européen
des brevets

(11) **EP 2 800 298 A1**

(12) # EUROPEAN PATENT APPLICATION

(43) Date of publication:
05.11.2014 Bulletin 2014/45

(51) Int Cl.:
*H04L 9/00* (2006.01)     *H04L 9/08* (2006.01)

(21) Application number: 14166107.4

(22) Date of filing: 25.04.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 29.04.2013 CA 2815984
29.04.2013 US 201313872507

(71) Applicant: **Her Majesty The Queen, In Right Of Canada, As Represented by the Minister of National Defence Ottawa, ON K1A 0K2 (CA)**

(72) Inventor: **Lemieux, Stéphane R Kanata, Ontario K2K 2T2 (CA)**

(74) Representative: **Boult Wade Tennant Verulam Gardens 70 Gray's Inn Road London WC1X 8BT (GB)**

(54) **Method and system for calculations on encrypted data**

(57) A method and device for generating a communal decryption key among participants to permit sharing of sensitive data, the method at a current participant includes generating a secret value; adding the generated secret value to an in progress key to create a modified in progress key; and forwarding the modified in progress key to a subsequent participant in accordance with a predetermined ordering of participants, over a predetermined number of rounds. Further a method for sharing of sensitive data among participants, the method at a current participant includes constructing an exponent by combining a secret value of the current participant and the sensitive data; creating an encrypted value using the constructed exponent; publishing the encrypted value; finding a product of encrypted values of all participants; and decrypting the product of encrypted values using a communal decryption key, wherein the communal decryption key includes secret values of all the participants.

FIG. 2

**Description**

**FIELD OF THE DISCLOSURE**

The present disclosure relates to homomorphic cryptography and in particular relates to a system for sharing information between a plurality of users without compromising the privacy of individual users.

**BACKGROUND**

The sharing of information among various parties can, in some situations, be useful to all of the parties. However, in many cases, the sensitivity of the information itself may preclude such sharing. For example, many companies may be subject to cyber-attacks or cyber incidents, but may be reluctant to share details about such cyber-attacks or cyber incidents with other companies for fear of revealing potential weaknesses or vulnerabilities in their system. However, knowledge of other cyber-attacks or cyber incidents could lead to the identification of patterns and the ability of companies to increase their ability to withstand future cyber incidents.

In other situations, it is desirable to share information among a plurality of members of a group but to maintain anonymity for the entity supplying that information. For example, this may apply to participation in surveys where the anonymity of the party taking the survey may lead to better truthful answers.

One option to resolve the above is to provide for a trusted third party that could receive data from various members of a group and compile statistics which could then be shared among the members. However, in some cases it is impossible or impractical to designate a trusted third party.

A system that could provide for the aggregation of data from statistical data of a group of participants without requiring a trusted third party has been proposed within US patent publication no. 2012/0204026 to Shi et al. However, the Shi protocol is limited in its scalability and has limited plain text space. Further, the protocol in Shi may suffer from data leakage issues.

**BRIEF DESCRIPTION OF THE DRAWINGS**

The present disclosure will be better understood with reference to the drawings, in which:

**Figure 1** is a block diagram showing the sharing of encrypted data statistics through the use of a trusted third party;
**Figure 2** is a block diagram showing the sharing of statistics of encrypted data in accordance with one embodiment of the disclosure;
**Figure 3** is a dataflow diagram showing the creation of a communal decryption key in a time series embodiment;
**Figure 4** is a dataflow diagram showing the finding of a sum of encrypted values in a time series embodiment;
**Figure 5** is a dataflow diagram showing the creation of a communal decryption key in a batch process embodiment;
**Figure 6** is a dataflow diagram showing the finding of a sum of encrypted values in a batch process embodiment;
**Figure 7** is a flowchart showing the sharing of anonymous data between a group of participants;
**Figure 8** is a flowchart showing the verification of shared data;
**Figure 9** is a flowchart showing the use of multiple rounds of the embodiments of the present disclosure for further data processing; and
**Figure 10** is a simplified block diagram of a computing device capable of performing the embodiments of the present disclosure.

**DETAILED DESCRIPTION OF THE DRAWINGS**

The present disclosure provides a method at a computing device for generating a communal decryption key among at least three participants to permit sharing of sensitive data, the method comprising: at a current participant: generating a secret value; adding the generated secret value to an in progress key to create a modified in progress key; and forwarding the modified in progress key to a subsequent participant in accordance with a predetermined ordering of participants; and wherein said communal decryption key is derived upon performing said generating, adding and forwarding over a predetermined number of rounds.

The present disclosure further provides a method at a computing device for sharing of sensitive data among at least three participants, the method comprising: at a current participant: constructing an exponent by mathematically combining a secret value of the current participant and the sensitive data; creating an encrypted value using the constructed exponent; publishing the encrypted value; finding a product of encrypted values of all said participants; and decrypting the product of encrypted values using a communal decryption key, wherein the communal decryption key includes secret values of all said participants.

2

Governments or corporations would benefit from sharing cyber incident data with other allies to ensure better joint situational awareness and coordinated network defence. Unfortunately, the sensitive use of cyber intelligence may be seen to outweigh the benefits of such sharing. Traditionally, the only options would be to openly share the data or to pass the data to a trusted third party who would perform aggregation and statistical calculations. For many applications, finding and relying upon a trusted third party is infeasible. Thus, in accordance with the present disclosure, there is provided a method to perform statistical calculations on encrypted data such that only the statistical properties it can be decrypted while maintaining the privacy of the data itself. The embodiments provided herein may be modified to accommodate either time series or batched processed data and various checks are provided in the embodiments to ensure that participants who participate and provide data are not unfairly skewing the results for their own gain.

Traditionally a solution to the problem of sharing data would include a trusted third party.

For example, an employer may wish to perform a survey on its employees asking who is planning to leave the firm within the next year. An employee may be reluctant to share such data with the employer. However, the employer may benefit from statistics compiled from all employees indicating an estimated turnover.

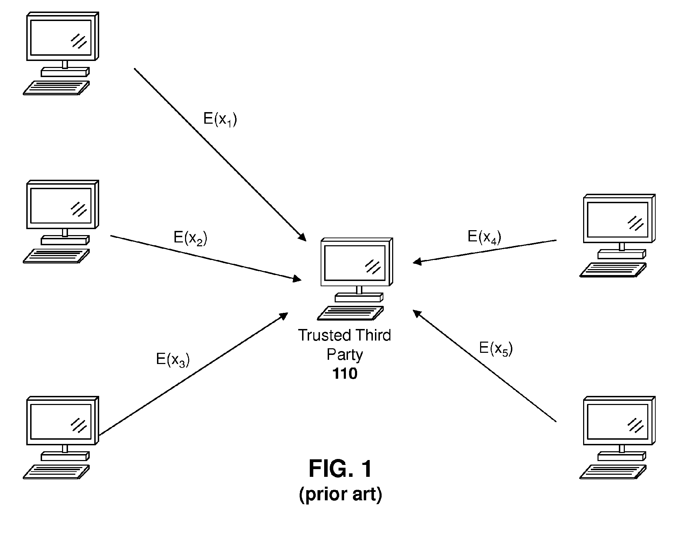

Referring to **Figure 1** shows a computing environment in which users **110, 112, 114, 116** and **118,** communicating with a trusted third party computer **120.** Each user i has data $x_i$ that it does not want to disclose to the other users but statistics on that data may be beneficial to the other users. For example, user **110** may be a first employee and the user may estimate that the chances of user **110** of leaving in the next year are 40%. Thus, in response to the question, a value of 0.4, represented by $x_1$ may be encrypted and passed to trusted third party 120 as $E(x_1)$, as shown by message **130.** The decryption key for the message is known by trusted third party **120.**

Similarly, user **112** sends message **132** with $E(x_2)$; user **114** sends message **134** with $E(x_3)$; user **116** sends message 136 with $E(x_4)$; and user **118** sends message **138** with $E(x_5)$.

The example of **Figure 1** shows only five users. However this is not limiting and more or less users may be involved.

Trusted third party **120** must then use decryption keys for each of messages **130** to **138** to decrypt the data. The data may then be summed, and an average found by dividing the sum by the number of users. For example, if user **110** indicates a 40% probability of leaving, user **112** indicates a 0% probability, user **114** indicates a **100%** probability, user **116** indicates a 10% probability and user **118** indicates a 0% probability, then trusted third party **120** performs the following calculation:

$$D(E_1)=0.4; \ D(E_2)=0; \ D(E_3)=1; \ D(E_4)=0.1; \ D(E_5)=0.$$

The sum of these values is therefore 0.4 + 0 + 1 + 0.1 + 0 = 1.5. Therefore the average is 1.5 divided by 5 users or 0.3. Therefore the probability is that there will be a 30% turnover. This may then be shared with each user.

However, various issues exist with the embodiment of **Figure 1.** A first issue is that a trusted third party must be found and must be trusted by all of the users. Otherwise the users may not provide truthful answers or may not share data at all. A second issue is that the trusted third party must decrypt each individual user input, which could be computationally intensive as the number of users grows.

The present disclosure thus provides methods for implementation of a cryptographic algorithm and a system for its use that allows participants to compute statistics on encrypted data and then decrypt only the resulting statistics. This allows distributing participants to contribute their own sensitive data to the computations without sacrificing their privacy.

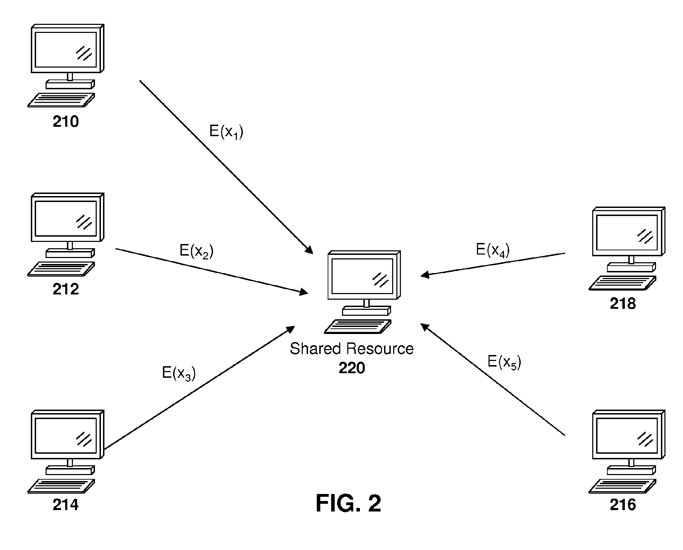

Reference is made to **Figure 2,** which shows an example system for implementing a protocol for computation on encrypted data (COED), according to an embodiment of the present matter. In particular, in the embodiment of **Figure 2** no trusted third party is needed, as described above. Rather, a shared resource **220** may be utilized. In this case, each of users **210, 212, 214, 216** and **218** may share data. In particular, each of the users encrypts its data and provides the data to the shared resource **220.** Shared resource **220** may calculate a sum of the encrypted data in accordance with the following:

$$C=E(x_1)+E(x_2)+E(x_3)+E(x_4)+E(x_5)$$

Given a coordination of the encryption keys as provided below, the shared resource can then decrypt C in accordance with decryption algorithm D(C) and obtain a sum of all of the data. However, the decryption does not give the individual values $x_i$ and only the sum is found.

As the shared resource knows the number of participants, the average may be found by dividing C by the number of participants to find the average and the same value as that obtained in the example of **Figure 1** may be returned.

In the embodiment of **Figure 2,** the individual encrypted inputs E(x$_i$) to the shared resource do not need to be decrypted individually, thus preventing the data within the encryption from being exposed. Further, computational savings are realized by only needing to perform the decryption on the sum of the encrypted values.

In order to allow the decryption on the sum of the encryptions, each encryption is coordinated to create a decryption key capable of decrypting the sum. Details of the coordination are provided below.

While **Figure 2** is described with respect to survey data, other uses of the methods and systems of the present disclosure include enhanced management of federated situational awareness. For example, when several parties in a group depend on shared infrastructure, the participants can arrive at an overall picture of how critical the infrastructure is to the group without revealing the dependence of any other party on that infrastructure.

In the context of cyber security, normally cooperative partners may wish to establish a common operational framework for coordinated cyber defence. Understandably however, they may not be willing to share information about the composition of their network as this could expose vulnerabilities. They may also wish to protect data about their own cyber incidents and risk management techniques for fear of embarrassment or exploitation. In accordance with one embodiment of the present disclosure, the methods provided would allow partners to understand the overall landscape of the cyber forum in order to better coordinate and possibly standardize their defences.

Further, for competitive reasons, companies and government agencies may be wary of publicly acknowledging their dependencies on critical infrastructure such as publicly or privately owned roads, bridges, water and oil supplies and supply lines, telephone and internet lines and poles, power lines, power plants, electrical equipment, internet equipment, satellites and the like. However, it may be important to have an understanding of the dependencies on certain infrastructures in order to understand common dependencies and to help identify interdependencies in order to mitigate, and prepare for, and respond and recover from incidents.

In other embodiments, government departments or private organizations may benefit from using the embodiments herein. For example, any agency or company that gathers survey data for statistical analysis could benefit in two ways. First, individuals asked to participate in the survey may be more willing to do so if their anonymity is guaranteed. Secondly, actual data is never received by a surveyor so that the burden to preserve information privacy is reduced.

Other non-military applications include sensor network aggregation, smart metering, public health and clinical research, population monitoring and sensing and cloud services, among others.

While the present embodiments are described with regard to modular arithmetic, this is not limiting and other implementations may use elliptical curves or other abstract groups.

## COED Protocol For Time Series Data

The present disclosure provides for embodiments in which no trusted third party exists. As discussed above, in some applications reliance on a third party may be problematic. Therefore, a method is provided for participants to generate their own encryption keys and combine them to safely produce a communal decryption key. However, this is not limiting, and other embodiments of the COED protocol may be implemented where each participant is assigned an encryption key by a trusted third party.

In the embodiments below, a number $n$, of participants, want to share statistics about their data. Each participant is designated as $P_j$, where $j$ is 1...$n$.

In accordance with the present disclosure, each participant $P_j$ has a value $x_j$ that it wishes to encrypt. Each of the $n$ participants produces a secret value $d_j$ sufficiently large to make the discrete logarithm problem (DLP) base $g$ infeasible modulo p.

In this case, $g$ is a primitive root of = $\mathbb{Z}_p^x$ , where G is a cyclic group of prime order p for which the decisional Diffie-Hellman problem (DDHP) is hard.

The integer p is prime and has the following properties:

a. The prime $p = rp' + 1$.

b. The integer $p'$ is a prime sufficiently large to ensure that the discrete logarithm problem (DLP) base $g$ is infeasible modulo $p$.

c. The even integer $r$ is large enough so the product of the maximum number of participants and desired plaintext space per participant is less than $\frac{r}{2}$.

d. The integer $r$ is $\beta$-smooth so that the DLP base $a = g^{p'}$ modulo $p$ is easily solvable. In this case $a$ has an order $r$ and an efficient method to solve the DLP exists which is time proportional to $\sqrt{\beta}$.

e. The integer r is chosen so $1 - 2\frac{\phi(r)}{r}$ is sufficiently small, since this is the probability that $H(t)$ will be unusable for a given time *t*. Here *H* is a hash function $\mathbb{Z} \rightarrow G$ and $\phi(r)$ refers to the Euler phi function.

Thus each participant contributes to a communal decryption key. The communal decryption key is the sum

$$D \equiv -\sum_{j=1}^{n} d_j (mod\ p - 1).$$

The key is built in a sequence of *L* rounds where *L* is equal to $\frac{n}{2}$ if *n* is even and $\frac{n-1}{2}$ if *n* is odd.

For key generation, each participant contributes to the communal decryption key in sequence to ensure that no participants sees the "in progress" key at two or more consecutive steps other than when they contribute to the key. That is, each participant will receive the in progress key, contribute to it, and let it pass to the next participant in the sequence until it cycles along to the start and no party will see what the other party contributes to the key.

It is assumed that pairs of secret keys for a trusted private symmetric cryptosystem, such as Advanced Encryption Standard (AES), have previously been exchanged in order to ensure that successive parties can communicate in secret. The in-progress key travels from one participant to the next in an order determined by the n-cycle permutation that dictates the path for that round, as provided below.

In particular, the n-cycle permutation may be defined as follows. Let $S_m$ denote the set of all bijections from the set {1, 2, ..., m} onto itself. For $n \leq m$, an n-cycle is a string of *n* integers which represents the element of $S_m$ which cyclically permutes these n-integers (and fixes all other integers.)

In a first round, the n-cycle may always be (1 2 3 ... n), which denotes 1 goes to 2, 2 goes to 3, ... n-1 goes to n, and n goes to 1. Each round starts and ends with the same participant.

The n-cycles satisfy the following property:

$$\bigcup_{i=1}^{L} \left( \alpha_i(j) \cup \alpha_i^{-1}(j) \right) = \{1, 2, \ldots, j-1, j+1, \ldots n\}$$

In the above, $\alpha_i(j)$ denotes the image of *j* under the *i*[th] n-cycle and $\alpha_i^{-1}(j)$ denotes the pre-image of j under the *i*[th] n-cycle. The property is used for security, as explained below, and only *L* cycles are needed.

Each participant $P_j$, generates values $z_{1j}, ..., z_{Lj}$ sufficiently large so that both $d_j = \sum_{k=1}^{L} z_{kj} (mod\ p - 1)$ and $-d_j$ are sufficiently large. For the *k*[th] round, $P_j$ will receive the in-progress decryption key and multiply by $g^{-zkj}$.

Thus, in the first round as indicated above, participant $P_1$ generates a large random number *H* and finds *H* - $z_{11}(mod\ p - 1)$ and secretly passes it to $P_2$.

Participant $P_2$ repeats the process and passes *H* - $z_{11}$ - $z_{12}$ (*mod p*-1) to Participant $P_3$. The round continues until the last member computes *H* - $z_{11}$ - $z_{12}$ - $\cdots$ - $z_{1n}(mod\ p$ - 1) and passes it back to $P_1$.

Participant $P_1$ now starts round two by adding to the in-progress key by $-z_{21}(mod\ p$ - 1) and sending the in-progress key to participant $P_{\alpha2(1)}$, who then adds to the key and passes it to $P_{\alpha2(\alpha2(1))}$, and so on. After the Lth round is complete the in-progress key is returned to $P_1$, who subtracts *H(mod p*-1), producing the communal decryption key.

The key is $D = -\sum_{j=1}^{n} d_j (mod\ p - 1)$.

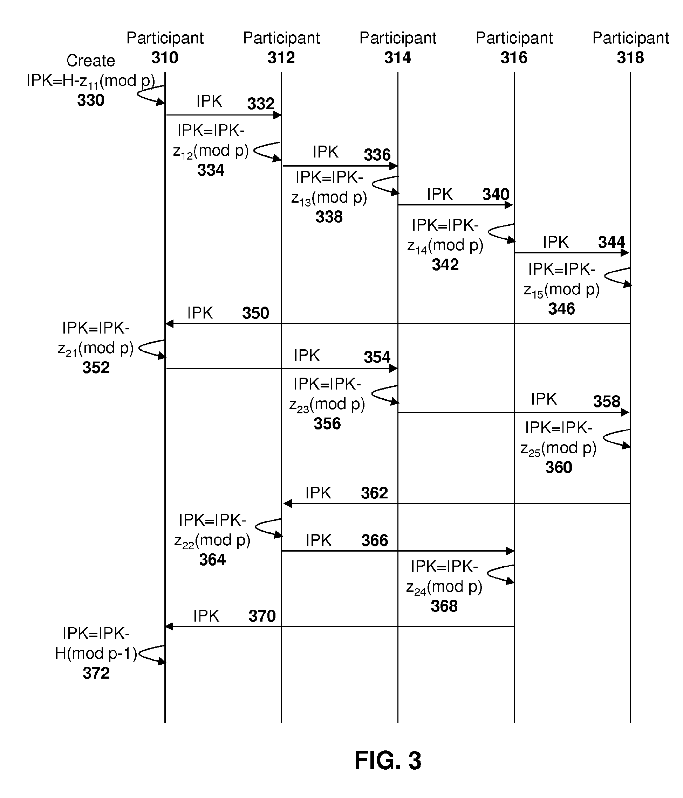

The above may be illustrated, for example, with reference to **Figure 3.** In the example of **Figure 3,** five participants wish to exchange statistics about encrypted data and thus need to generate a coordinated decryption key. In the example of **Figure 3** the participants are shown as participant **310,** participant **312,** participant **314,** participant **316,** and participant **318.**

The process begins with participant **310,** who starts to create the in-progress key (IPK) by using a random number H and the key for the first round, $z_{11}$, as shown at reference **330.** Participant **310** then passes the in-progress key to participant **312,** as shown by reference **332.**

Participant **312** adds the first round contribution to the key, $z_{12}$, as shown by reference **332** and passes the in-progress key to participant **314,** as shown by reference **336.**

Participant **314** adds the first round key, $z_{13}$, as shown at reference **338** and passes the in-progress key to participant **316** as shown by reference **340.**

Participant **316** adds the first round key, $z_{14}$, as shown at reference **342** and passes the in-progress key to participant **318** as shown by reference **344.**

Participant **318** adds the first round key, $z_{15}$, as shown at reference **344.** The first round then ends by passing the in-progress key back to participant **310** as shown by reference **350.**

Participant **310** begins the second round by adding the second round key, $z_{21}$, to the in-progress key, as shown by reference 352. For security, the in-progress key is not passed to participant **312** in the second round from participant **310** since this would allow participant **312** to gain a knowledge of the key of participant **310** if participant **312** collaborated with participant **318**. Thus, participant **310** passes the in-progress key to participant **314** in the second round, as shown by reference **354.**

Participant **314** adds the second round key, $z_{23}$, to the in-progress key as shown by reference **356** and passes the in-progress key to participant **318,** as shown by reference **358.**

Participant **318** adds the second round key, $z_{25}$, to the in-progress key as shown by reference **360** and passes the in-progress key to participant **312,** as shown by reference **362.**

Participant **312** adds the second round key, $z_{22}$, to the in-progress key as shown by reference **364** and passes the in-progress key to participant **316,** as shown by reference **366.**

Participant **316** adds the second round key, $z_{24}$, to the in-progress key as shown by reference **368** and passes the in-progress key to participant **310,** as shown by reference **370.** This ends the second round.

As there are five participants, two rounds are needed in accordance with the above and thus the key along with the original random number are passed at reference **370.** Participant **310** then removes the random number *H*, as shown by reference **372,** thereby creating the decryption key. The decryption key may then be shared between the participants (not shown).

As provided above, the secret value for each participant is $d_j = \sum_{k=1}^{L} z_{jk} (mod\ p - 1)$ and thus each participant adds together the keys used in each round to create the secret value.

In an alternative embodiment, if a trusted third party exists, the trusted third party could distribute the secret values to each participant.

A session key is then generated. The session key, *H(t)* is at least the square of a primitive root, as shown by:

$$a \equiv H(t)^{p'} (mod\ p)$$

If the session key is not the square of the primitive root, *H*(*t* + 1) should be tested, and so on. In the above, *a* has an order of r or $\dfrac{r}{2}$**.**

Each participant can then encrypt the payload $x_j$. Each participant computes:

$$c_j \leftarrow H(t)^{d_j + p' x_j} \equiv H(t)^{d_j} a^{x_j} (mod\ p)$$

The $c_j$ can then be made publically available and/or available to other participants.

Decryption may then occur by multiplying all of the values of $c_j$ and multiplying by $H(t)^D$. In particular,

$$\prod_{j=1}^{n} c_j (mod\ p) = H(t)^{(d_1 + d_2 + \cdots + d_n)} a^{(x_1 + x_2 + \cdots + x_n)} (mod\ p)$$

Since $H(t)^D = H(t)^{-(d_1 + d_2 + \cdots + d_n)}$, the product of the two terms results in $a^{(x_1 + x_2 + \cdots + x_n)} (mod\ p)$. This discrete logarithm problem base a, is easy to solve since the order of *a* is $\beta$-smooth, leading to $(x_1 + x_2 + \cdots + x_n)$. Note that while the sum is derivable, the individual data is not.

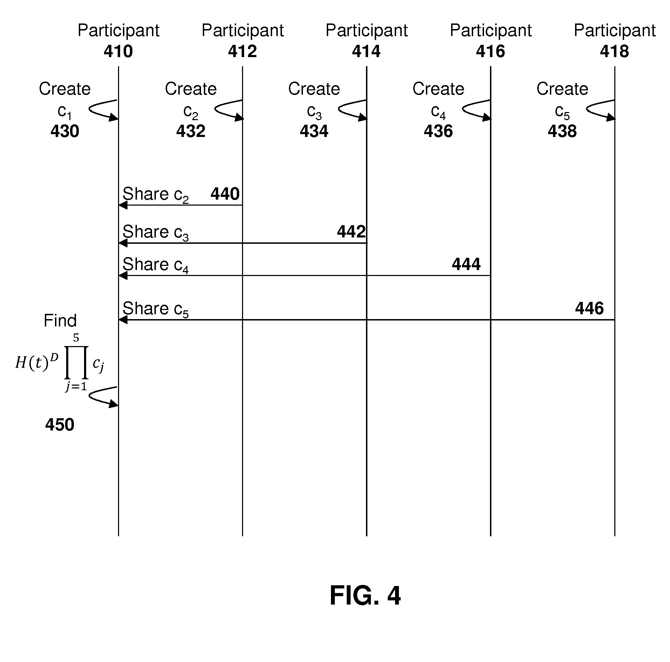

Reference is now made to **Figure 4,** which shows participants 410, **412, 414, 416** and **418** communicating with each other. Each of the participants has a secret value $d_j$, which may, for example, have been obtained using the process of **Figure 3.** Further, each of the participants has information $x_j$ that the participant does not want to share unencrypted, but is willing to share encrypted statistics on.

In accordance with the embodiment of **Figure 4,** participant **410** creates $c_1 = H(t)^{d_1 + p' x_1}$, as seen by reference **430.** Similarly, participant **412** creates $c_2$, as seen by reference **432**; participant **414** creates $c_3$, as seen by reference **434**; participant **416** creates $c_4$, as seen by reference **436**; and participant **418** creates $c_5$, as seen by reference **438.**

Each of the participants may then share the encrypted values with each other. In the embodiment of **Figure 4,**

the participants are shown sharing their value with participant **410.** However, this is merely a simplification and in some cases all values are shared among all participants.

In particular, participant **412** shares $c_2$, as seen by reference **440;** participant **414** shares $c_3$, as seen by reference **442;** participant **416** shares $c_4$, as seen by reference **444;** and participant **418** shares $c_5$, as seen by reference **446.**

Once participant **410** has all of the values, the participant may find the product of the values and use the common decryption key to find the value of the sum $(x_1 + x_2 + x_3 + x_4 + x_5)$ in the example of **Figure 4.** Participant **410** is however unable to find the value of any one of $x_2$, $x_3$, $x_4$, or $x_5$.

Finding a prime p with properties suitable for the COED protocol requires balancing the size of plaintext space required against either the probability of producing an unusable value of $H(t)$ or the length of time required to test for unusable values $H(t)$. The integer r must be divisible by 2 so that $rp' + 1$ is prime and hence odd, but this is the only limitation on the factorization of r.

For two reasons, one convenient factorization of r is $2rq^m$ for some prime q. This is convenient because the probability of a particular $H(t)$ being unusable is then $\approx \frac{1}{q}$ and in order to test that H(t) is usable, it only needs to be verified that neither of $H(t)^{\frac{p-1}{q^m}}$ and $H(t)^{\frac{p-1}{p'}}$ is 1.

However, given values for m and the approximate size of q and p', large primes p may be found such that $p = 2q^m p' + 1$. For example, a C-style arbitrary precision calculator may be used.

One of many examples for $p$, $q$, $p'$ is as follows. $p$ = 4105127973625235311446177177284242548770347986365900242460699553804754166846920871986861665143280664807970384831035251872614400967672135482271595816239240743140607055373152793691817277794702114434294924146231820831649396193739836259088207450226379008570503005264573926034053138740869386475443868442754836268634659207449008963664296075057478159947367759884332557810121470392867238168985893946278301292236654768057127735061641038091280141185652572298131309415673275987003203.

$p'$ =1797693134862315907729305190789024733617976978942306572734300811577326758055009631327084773224075360211201138798713933576587897688144166224928474306394741243777678934248654852763022196012460941194530829520850057688381506823424628814739131105408272371633505106845862982399472459384797163048353563296242 24213921.

q = 353.

m = 64.

$r = 2q^{64}$.

Theoretically the COED protocol can have an arbitrarily large a plaintext space. However the size of p grows proportionally as the size of plaintext grows, which may degrade the speed of the protocol beyond a threshold.

**The COED Protocol For Batch Processed Data**

In a further embodiment, the above may be simplified to make the task of finding a suitable prime $p$ easier. In the present embodiment, $\phi(r)$ is no longer considered and the hash function $H$ is not used.

In accordance with the present embodiment, g is a primitive root of $(\mathbb{Z}_p)^x$, where prime $p = rp' + 1$. Prime $p'$ is sufficiently large to make the DLP base g modulo p infeasible. However, unlike in the embodiments above, in the present embodiment r need only be large enough to accommodate as desired plaintext space and be $\beta$-smooth. The element $a \equiv g^{p'} \pmod p$

In order to choose the encryption secrets and build the decryption key, a similar process to that described above with reference to **Figure 3** may be used, except that in the present embodiment, vectors of values are used instead of single integers. Specifically, each participant $P_j$ has an s-encryption key $g^{\overline{d_j}} = (g^{d1j}..., g^{dsj})$.

Based on this, the decryption key is $D = -\sum_{j=1}^{n} \overline{d_j} = (-\sum_{j=1}^{n} d_{1j}, ..., -\sum_{j=1}^{n} d_{sj})$.

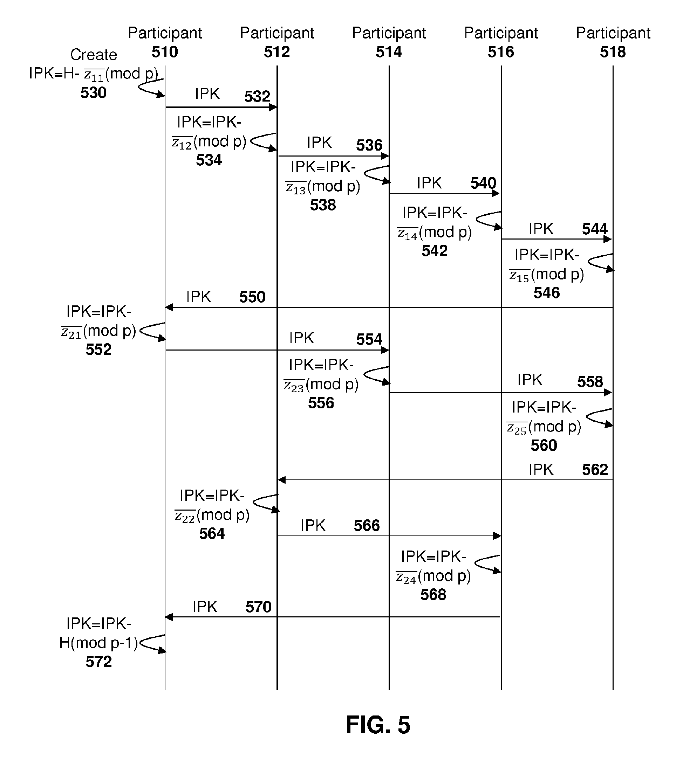

Reference is now made to **Figure 5.** In particular, in the example of **Figure 5,** participants **510, 512, 514, 516** and **518** wish to create a communal decryption key for batch processed data. In this regard, the process starts with participant **510** who creates an in-progress key comprised of a large random $H - \overline{z_{11}}$, modulo $p$, as shown by reference **530.** This IPK can then be provided to participant **512,** as shown by reference **532.** As indicated above, each pair of participants have a secure key for communications thereby allowing the IPK to be encrypted between the participants.

For example, participants **510** and **512** may share a symmetric key. In other embodiments, the IPK may be encrypted with the public key of participant **512** and participant **512** may then decrypt the I PK with its private key. Other examples are possible.

Once participant **512** receives the IPK at message **532**, the participant 512 then adds $\overline{z_{12}}$ to the IPK, as shown by reference **534** and forwards the new IPK to participant **514.**

Once participant **514** receives the IPK, it adds $\overline{z_{13}}$ to the IPK, as shown by reference **538** and forwards the IPK to participant **516,** as shown by reference **540.**

Once participant **516** receives the IPK it adds $\overline{z_{14}}$ as shown by reference **542** and forwards the IPK to participant **518,** as shown by reference **544.**

Once participant **518** receives the IPK, it adds $\overline{z_{15}}$ , as shown by reference **546** and returns the IPK to participant **510.** This ends the first round of the key establishment.

To start the second round participant **510** adds $\overline{z_{21}}$ to the IPK, as shown by reference **552** and forwards the IPK to participant **514,** as shown by reference **552.** The forwarding to participant **514** ensures the security of the key generation as described in the security section below.

Participant **514** adds $\overline{z_{23}}$ to the IPK, as shown by reference **556,** and then forwards the IPK to participant **518,** as shown by reference **558.**

Participant **518** adds $\overline{z_{25}}$ as shown by reference **560** and forwards the I PK to participant **512,** as shown by reference **562.**

Participant **512** adds $\overline{z_{22}}$ as shown by reference **564,** to the IPK and forwards the new IPK to participant **516.**

Participant 516 adds $\overline{z_{24}}$ to the IPK and returns the IPK to participant 510, as shown by reference **570.**

Participant **510** can then remove the large random value from the in-progress key, as shown by reference **572,** thereby creating the public decryption key D. This public decryption key can then be published to the participants (not shown).

Once each participant has the secret value $\overline{d_j}$, encryption may them be performed by each participant computing $\overline{c_j} \leftarrow g^{\overline{d_j} + p\overline{x_j}} \equiv g^{\overline{d_j}} a^{\overline{x_j}} (mod\ p)$.

The encrypted values may then be shared among participants or made publically available.

Decryption is performed by computing $g^D \cdot \prod_{j=1}^{n} \overline{c_j} (mod\ p)$. This produces $a^{\sum_{j=1}^{n} \overline{x_J}}$ and solving the DLP for base $a$ leads to $\sum_{j=1}^{n} \overline{x_j}$.

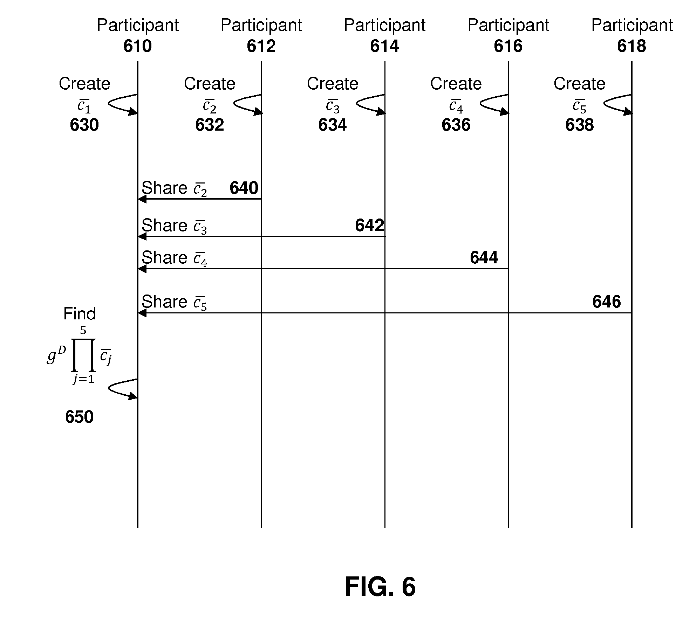

Reference is now made to **Figure 6.** In the embodiment of **Figure 6,** participants **610, 612, 614, 616** and **618** wish to share statistical properties of encrypted data. Thus each creates the batch processed encrypted data, shown by references **630, 632, 634, 636** and **638** in the embodiment of **Figure 6.**

Once the encrypted batch processed data is created for each participant, the value can be shared among the participants. In the embodiment of **Figure 6** a simplification is shown where the participants share their encrypted value with participant **610,** as shown by references **640, 642, 644** and **646.** However, in other embodiments, the participants can each share their data with the other participants and the example of **Figure 6** is not limiting.

Once participant **610** has received all of the encrypted data it can then find the product of the encrypted data and use the communal decryption key to find the sum of the batch processed data from the group of participants. As indicated above, the individual data from any participant is not decipherable from the decrypted sum.

From the above, the embodiments of **Figures 5** and **6** have little difference from the embodiments of **Figures 3** and **4.** However, the dropped condition on r makes the selection of p easier. Further, not having to check the order of *H*(*t*) and never needing to drop a session may increase implementation speed.

**The COED Protocol for Products of Data**

Rather than the sum of encrypted data, as provided in the embodiments of **Figures 3-6** above, a further embodiment provides for users to take the product of encrypted data.

The present embodiment may be used with either of the steam cipher or batch processed paradigms above, and is illustrated below with regards to the stream cipher paradigm. However, the batch process paradigm could be equally applied.

The key generation and setup are identical to the embodiments described in the examples of **Figures 3** and **5.**

For encryption, each participant $P_j$ computes $c_j$ in accordance with:

$$c_j \leftarrow H(t)^{d_j} x_j (mod\ p)$$

For decryption, the product of all $c_j$ provides

$$\prod_{j=1}^{n} c_j = H(t)^{\sum_{j=1}^{n} d_j} \cdot \prod_{j=1}^{n} x_j$$

Therefore, for decryption, multiplying the above by $H(t)^D$ leaves $\prod_{j=1}^{n} x_j$. Thus computing the discrete logarithm base $a$ is not necessary in this case.

The process of **Figure 4** could thus be used with the encryption described according to the present embodiment.

**The COED Protocol for Anonymous Reporting**

In accordance with a further embodiment, a large plaintext space allows messages to be sent. In this case, the messages may be provided anonymously and may then be decrypted by either a centralized authority or by all or a subset of participants.

In a first step, a participant wishing to encrypt a message converts the message to integers (mod p).

Thereafter, using the embodiments of Figures 4 or 6 above, if only one participant provides a message $x$ and the remaining participants encrypt a zero, then the sum of the values produces $x$, but the sender of x is anonymous.

However, if in a timeslot two participants encrypt $x$ and $y$ respectively, then the sum of the two values will make each individual message unrecoverable.

In accordance with the present disclosure, encryption may occur in two rounds. In a first round, using the multiplicative version of the COED protocol described above, a participant encrypts a "2" if a text message will be sent in the round and a "3" if no text message will be sent in the round by the participant.

In a second round, a participant who encrypted a "2" may encrypt a message $x$ and a participant who encrypted a "3" in the first round will encrypt zero.

The product from the first round may then be analyzed. If the product is $3^n$ then no message is being sent by any participant. If the product is $2 \cdot 3^{n-1}$ then only one participant is sending a message and the message may be properly decrypted. If the product is $2^i \cdot 3^{n-i}$, where $i > 1$, then $i$ messages were sent at once, and the messages may be resent in future slot using any collision avoidance technique.

If the product is anything other than the above, then a technical error exists. For example, one of the participants may not have participated or a message may have been lost.

Further, if a participant encodes a "3" in the first round and a value in the second round, this would be disadvantageous to the group, and data verification is provided below.

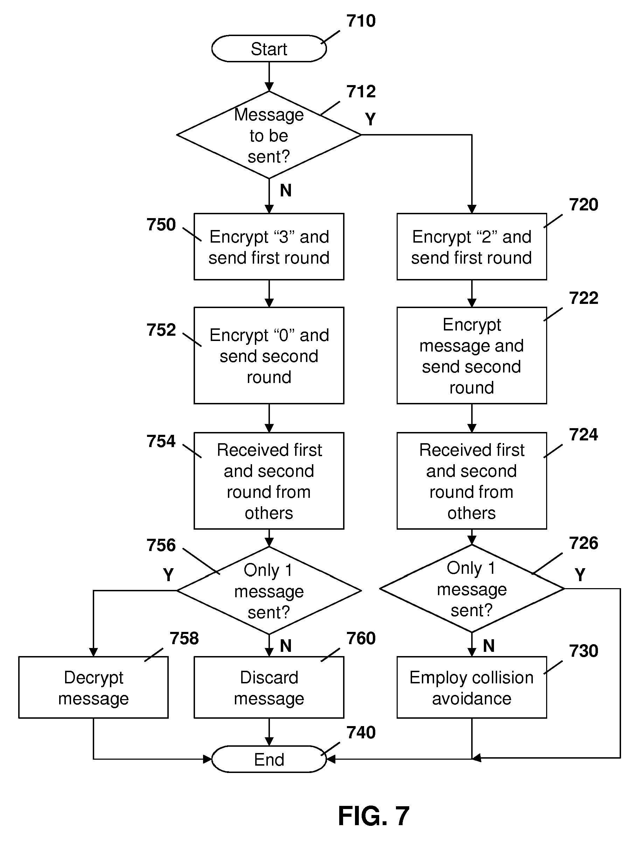

Reference is now made to **Figure 7,** which shows a process for providing anonymous data. In the example of **Figure 7,** the process assumes that the information is also decrypted at the device. However, in some embodiments a central authority may perform the decrypting and thus the decryption at the device is optional.

The process of **Figure 7** starts at block **710** and proceeds to block **712.** At block **712** a check is made to determine whether a message is to be sent during the particular time slot. If yes then the process proceeds to block **720** in which a "2" is encrypted and sent as part of the first round. The process then proceeds to block **722** in which the message is encrypted and sent in the second round.

From block **722** the process proceeds to block **724** in which the first and second rounds are received from the other participants. As part of block **724** the first round data is decrypted.

From block **724** the process proceeds to block **726** to determine whether only one message was sent in the time slot. As provided above, the sum of the first round can be used to determine if no messages, one message or multiple messages were sent in the time slot.

If the check at block **726** finds only one message was sent, then the message was from the computing device performing the sending and the process then proceeds to block **740** and ends.

Conversely, if more than one message was sent then a collision occurred and the process proceeds to block **730** and standard collision avoidance is employed to avoid a future collision. For example, a random number of time slots could be added before the message is retransmitted. Other examples of collision avoidance would be apparent to those skilled in the art.

From block **730** the process proceeds to block **740** and ends.

From block **712,** if the device does not have a message to be sent in the time slot the process proceeds to block **750** in which the device encrypts a "3" in the first round. The process then proceeds to block **752** in which the device encrypts a "0" in the second round.

From block **752,** the process proceeds to block **754** in which the first and second round encrypted data is received from the other participants and the first round data is decrypted. From the first round data it can be determined whether no messages were sent, one message was sent or more than one message was sent. If only one message was sent and the device is interested in the message then the process proceeds to block **758** in which the message is decrypted and the process proceeds to block **740** and ends.

If no messages or more than one message was received as identified in the check of block **756** the process then proceeds to block **760** in which any message is discarded and the process then proceeds to block **740** and ends.

If the device is not interested in decrypting the messages then the process may proceed directly from block **752** to block **740** and ends.

While the above describes the use of "2" and "3" in the first encryption, other values may be used. For example, the values may be reversed and a "2" may indicate no message is being sent. In other embodiments, other prime numbers could be used.

**The COED Protocol With Data Verification**

In some embodiments, data restrictions may be desirable. For example, one set of restrictions may be that:

> a. each encrypted value is positive; and
> b. for each participant $P_j$, its contributing values $(x_{1j},...x_{sj})$ must be less than or equal to a preset value K.

Such restrictions may be useful, for example, in cases where participants cast votes. For example, a set of infrastructure assets might exist where participants indicate cumulative dependencies for the various elements of the infrastructure.

If a participant wanted to "cheat", the participant could use a negative value on a particular asset that has no importance to the participant. The effect of the negative value would be to diminish the apparent overall importance of the asset.

Further, a participant could use a larger total value than allowed to inflate the importance of an asset that is important to the user.

Also, the user could user larger totals than allowed to increase the influence that the user has on the overall assets.

To enable data verification, a large integer m modulo is introduced to the embodiments above. The large integer may be derived in several ways.

A first way that the integer may be derived is through a trusted third party (TTP). In this case, as explained below, the trusted third party, if it colluded with any participant, would only impair the ability to check data integrity and would not compromise any participant's data.

Thus, for example, the TTP may choose secret primes $p_1 = 2p'_1 + 1$ and $p_2 = 2p'_2 + 1$ such that it is infeasible to factor the product $m_1 = p_1 p_2$. It is also therefore infeasible to compute $\phi(m_1) = (p_1 - 1)(p_2 - 1) = 4p'_1 p'_2$.

The TTP may then use a third prime, $p$, which is publicly known and chosen based on the restrictions of the relevant COED protocol. The TTP may then compute and publish $m = p_1 p_2 p$.

As with the batch embodiment above, $g$ is chosen to be a primitive root of $\left(\mathbb{Z}_p\right)^x$. Then $g(mod\ m)$ and $a \equiv g^{p'}(mod\ m)$ have an order $\phi(m_1)(p - 1)$ and $\phi(m_1)r,$ which are unknown to everyone but the TTP. Thus only the TTP can find inverses mod m. However, $a(mod\ p)$ has a publicly known order r.

Once m is generated, the participants collaborate to create a decryption key in the same manner as that provided above with respect to the embodiments of **Figures 3** or **5.** The decryption key is modulo $p$ since the order of the multiplative group modulo m is unknown to all but the TTP.

Both the stream cipher embodiments and the batch process embodiments described above can be modified in accordance with the present embodiment. The examples below are provided for batch process embodiments for illustration.

In accordance with the present embodiment, each participant further calculates and publishes a verification key $V_j$. The verification key is found by:

$$V_j = \prod_{i=1}^{s} g^{d_{ij}} \ (mod \ m)$$

If the batch processing embodiment is being used, the verification key is just the product of the coordinates of the participant's secret key. If the time series method is used then the verification key can be published after every *s* rounds of transmission.

For encryption, this is performed as described in the embodiments above, except that the calculations are made modulo m rather than modulo p. Thus, for the batch processing techniques with the present embodiment, a participant computes $\overline{c_j} \leftarrow g^{\overline{d_j} + p \cdot \overline{x_j}} \equiv g^{\overline{d_j}} a^{\overline{x_j}} (mod \ m)$.

For decryption, this may occur by reducing the product of each participant's encrypted values to modulo p and the multiplying each by $g^D$. Specifically $\prod_{j=1}^{n} c_j \equiv a^{\sum_{j=1}^{n} x_i} (mod \ m)$ is reduced to $\prod_{j=1}^{n} c_j \ (mod \ p)$.

The decryption can then find $g^D \prod_{j=1}^{n} c_j \ (mod \ p)$. Solving the resultant discrete logarithm problem base *a* and modulo p yields $\sum_{j=1}^{n} x_i$.

Data verification may then be performed. Depending on whether batch processing or time series data was used, the verification may be slightly different.

For each case, three items are verified.

A first ensures that the verification keys sent by each participant are proper. Specifically, for batch processing a first check is whether $(\prod_{j=1}^{n} V_j)(\prod_{i=1}^{s} g^{D_i}) \equiv 1 (mod \ p)$. For time series data a first check is whether $(\prod_{j=1}^{n} V_j)(\prod_{t=1}^{s} H(t)^D) \equiv 1 (mod \ p)$. If the answer to the check is no, then one or more participants has intentionally or unintentionally sent an improper verification key. In this case, verification keys must be retransmitted.

After the verification keys have been confirmed, a second verification is whether data has contravened the restrictions. For batch processing, the second check is:

    a. For each $i \in \{1, ... s\}$, does solving the DLP of $g^{D_i} \cdot \prod_{j=1}^{n} g^{d_{ij} + p' x_{ij}} (mod \ p)$ yield a value that is less than or equal to *nK*, and, if yes:

    b. Given $g^{-D_i} (mod \ p)$, the TTC calculates $g^{D_i} (mod \ m)$. Publically, $Z_i \equiv g^{D_i} \cdot \prod_{j=1}^{n} g^{d_{ij} + p' x_{ij}} (mod \ m)$ may then be calculated. Since the decryption already solved the DLP for $a^{\sum_{j=1}^{n} x_i} (mod \ p)$ to obtain $\sum_{j=1}^{n} x_i$, this $\sum_{j=1}^{n} x_i$ can be used to calculate $a^{\sum_{j=1}^{n} x_i} (mod \ m)$ and verify whether it is identical to $Z_i$

For time series data, the second check is:

    a. For $t \in \{1,...s\}$, does solving the DLP of $H(t)^D \cdot \prod_{j=1}^{n} (g^{h_t})^{d_{tj} + p' x_{tj}} (mod \ p)$ yield a value that is less than or equal to *nK*, and, is $H(t)^D \cdot \prod_{j=1}^{n} (g^{h_t})^{d_{tj} + p' x_{tj}}$ the same value (*mod p*) and (*mod* m)? In this case the TTP again needs to find the necessary inverse mod m.

If the answer to the second check in either the batch processed data or time series data is no, then one or more participants have used data that contravenes the restrictions. The culprit may be found with a third check. Further, even if the answer to the second check is yes, the third check may still be used to expose a cheater.

The third check for batch processed data is:

    a. For each $j \in \{1, ... n\}$, does solving the DLP of

    $V_j \cdot \prod_{i=1}^{s} g^{d_{ij} + p' x_{ij}} (mod \ p)$ yield a value that is less than or equal to *sK*, and is $V_j \cdot \prod_{i=1}^{s} g^{d_{ij} + p' x_{ij}}$ the same value (*mod p*) and (*mod* m) using the techniques of check 2?

The third check for time series data is:

    a. For $j \in \{1,... n\}$, does solving the DLP of $V_j \cdot \prod_{t=1}^{s} (g^{h_t})^{d_{ij} + p' x_{ij}} (mod \ p)$ yield a value that is less than or equal to $sK$, and, is $V_j \cdot \prod_{t=1}^{s} (g^{h_t})^{d_{ij}+p'x_{ij}}$ the same value (*mod p*) and (*mod* m)? In this case the TTP again needs to find the necessary inverse mod m

The third check finds the participant who used improper data if the second check is negative.

For the second and third check, if solving the DLP modulo $p$ yields a result that is larger than acceptable then an infraction has been committed.

However, it is possible to encrypt a value or values that are not acceptable but are undetectable through straight decryption modulo p. For example, if a participant $P_L$ encrypted a value -b for a small value of $b$ in round $i$ and all other participants complied with the rules in round $i$.

If $P_L$ sets $x_{iL}$ = r - b and the $i^{th}$ component of the data sums of other participants sums to $y > b$ then decryption modulo $p$ will yield the value $a^{r-b+y} \equiv a^{y-b}$(mod p) because $a$ has order $r$ modulo $p$. In this case, solving the DLP will yield $y - b$. However, decrypting modulo $m$ yields $a^{r-b+y}$(mod m), which will not further reducle because $a$ has order $\phi(m_1)r$ modulo $m$. While participant $P_L$ could subvert this by setting $x_{iL} = \phi(m_1)r - b$, since decrypting modulo p and m will yield y-b, this requires a knowledge of $\phi(m_1)$ whose computation is infeasible without knowing $p_1$ and $p_2$. The calculation for check 3, when $j = L$, will also yield two different results modulo $p$ and $m$, identifying participant $P_L$ as committing the infraction.

Similarly, if participant $P_L$ wishes to subvert the system by using values whose sum is larger than $sK$. In this case $P_L$ may try to use values $x_{iL} = K + b_i$ for $i \in \{1, ..., s\}$. In this case $P_L$ would want $\sum_{i=1}^{s} b_i = yr$ so that

$$V_L \cdot \prod_{i=1}^{s} g^{d_{iL}+p'x_{iL}} \equiv a^{\sum_{i=1}^{s} K+b_i} \equiv a^{\sum_{i=1}^{s} K}(mod\ p).$$ Again, however, participant $P_L$ would need $\gamma$ to be a multiple of $\phi(m_1)$ for the same calculations modulo m in order to achieve the same result. Again, this is infeasible without knowing $p_1$ and $p_2$.

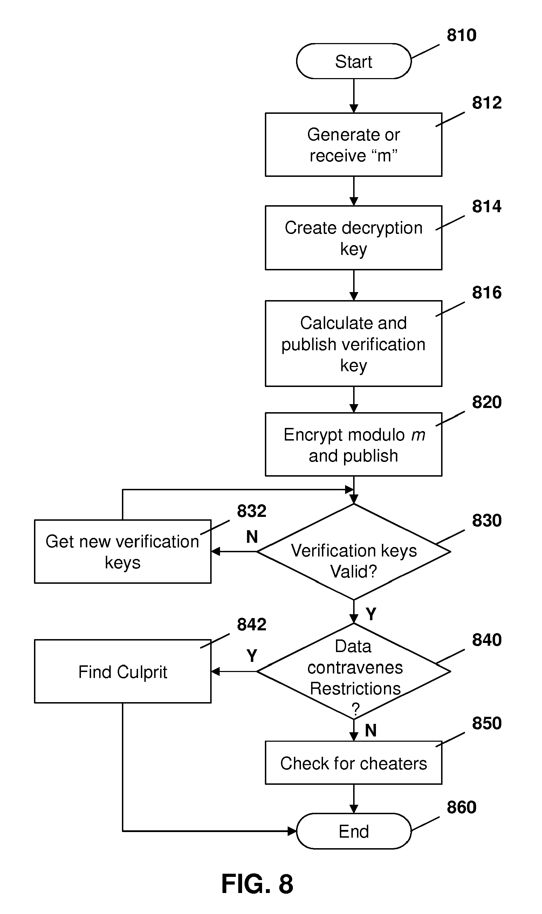

Reference is now made to **Figure 8,** which shows a process at a computing device for verifying the data provided by the participants. In particular, the process of Figure 8 starts at block 810 and proceeds to block 812 in which the computing device either receives or participates in the creation of "m", as described above.

Once "m" is created or received the process proceeds to block 814 in which a decryption key is created in accordance with the various embodiments described herein. For example, the processes of Figures 3 or 5 could be used.

From block 814 the process proceeds to block 816 in which the computing device calculates and publishes the verification key in accordance with the above.

The computing device is then ready to encrypt data and in the embodiment of Figure 8 the data is encrypted modulo m and published, as shown by block 820.

The computing device can then proceed to block 830 in which the set of verification keys are checked in accordance with check 1 above to determine whether the keys are valid. If no, the process proceeds to block 832 in which new verification keys are obtained which can then be checked again at block 830.

Once the verification keys are validated the process proceeds to block 840 in which a check is made to determine whether the data contravenes the data restrictions in accordance with check 2 above.

If the data contravenes the data restrictions in accordance with check 2, the process proceeds to block 842 in which the culprit is found in accordance with check 3 above. The process then proceeds to block 860 and ends.

If the data does not contravene the data restrictions, the process proceeds from block 840 to block 850 in which check 3 is still performed in order to determine whether there are cheaters. From block 850 the process proceeds to block 860 and ends.

**Security**

The security of the above embodiments is provided below. Attacks on the protocols may be divided to attacks initiated during the communal decryption key generation phase and attacks that utilize part or all of the encrypted data, the formed decryption key and verification keys.

*Key Generation*

During the key generation, the security is limited by the level of the symmetric cryptosystem used to share the communal decryption key as it is being created, and the security of the above protocols cannot exceed this.

Further, if $n$ - 1 participants collude, then the protocol will fail. This is because if the sum of the information is known and the sum of the $n$ - 1 participants is known, then the information provided by the non-colluding participant is derivable. Specifically, if we know $x_1 + x_2 + x_3 + \cdots x_n$ = Y and the n - 1 participants have a sum $x_1 + x_2 + \cdots + x_{n-1}$ then this sum can be subtracted from Y to obtain $x_n$,

However, to have $n$ - 1 participants colluding is a high threshold. As shown below, the protocol is secure if $n$ - 2 or less participants collude.

Further, the protocols above therefore have the limitation that the number of participants is at least three. Having only two participants leads to the issue of having $n$ - 1 participants colluding and results in the ability of each participant to decipher the data of the other.

During key generation, the in-progress decryption key is passed from $P_j$ to $P_{j+1}$ and then to $P_{j+2}$. If participants $P_j$ and $P_{j+2}$ collude the secret created by $P_{j+1}$ in the first round can be found simply by dividing the key as received by $P_{j+2}$ with the key sent by $P_j$. However, in order to decrypt the asset value encrypted by $P_{j+1}$, colluders would need to perform this act after $P_{j+1}$ has contributed in each round.

However, the rounds are designed so that the union of the participants to whom $P_{j+1}$ sends its in-progress key and the participant from whom $P_{j+1}$ receives its in-progress key is the set of all of the other $n$ - 1 participants. Therefore, in order to uncover the total decryption key contribution of participant $P_{j+1}$, all of the other participants must collude.

Alternatively, an attacker could capture and try to decrypt the in-progress key after each round, and the success of the attacker would be based on the strength of the symmetric cryptography between the participants, as described above.

*Attacks on Encrypted and Decrypted Data*

Attacking the protocols without knowing components of the decryption key poses two problems for a potential attacker. A first is that, if a first data set is used to encrypt to encrypted values and simultaneously decrypts to the communally decrypted sum, then there is almost always other data sets that encrypt to the same encrypted values and simultaneously decrypt to the same communally decrypted sum. While an attacker may find one of the data sets, it will be indistinguishable from the other sets generated if only the encrypted and communally decrypted data is known. A second problem is that even creating the plausible data set is computationally infeasible due to the computation infeasibility of solving instances of the discrete logarithm problem for $g$ mod $p$.

Specifically, as indicated above, $g^{d_{ij}} a^{x_{ij}} = g^{d_{ij} + p' x_{ij}}$, and thus all of the encrypted values, decryption keys, and verification keys are exponents of $g$. By design, linear operations can be performed on the exponents and thus the exponents may be regarding as forming a linear system of equations whose variables are all of the $d_{ij}$ and $x_{ij}$ terms. However, this does not allow the solving of the linear system since determining which linear operations to perform requires solving instances of the DLP of $g$ mod $p$.

For example, consider $g^{d_{ij}} a^{x_{ij}} = y_{ij}$. The corresponding linear equation is $d_{ij} + p' x_{ij} = \log_g(y_{ij})(mod\ p)$. Since the solving of $\log_g(y_{ij})$ is computationally infeasible, the term must remain a variable. While some linear operation may be used to isolate $x_{ij}$ but the term will be equal to some linear combination of discrete logs of $g$ mod $p$ which will still need to be solved.

Further, even assuming that the DLP for $g$ mod $p$ is efficiently solvable, there is no guarantee that the resulting system of linear equations will have a unique solution. In fact, with at least three participants, the resulting system of linear equations always has a free parameter, as shown below. Thus, in all but a few cases there is a guarantee to have multiple solutions. Exceptions are if every participant chose a 0 value for each $x_{ij}$.

The proof of the above is provided in two stages. First, it is shown below that the matrix corresponding to the system of linear equations will have rank less than the number of variables. Second, it is shown that how to explicitly generate spurious data sets for a fixed data set and encryption. For each asset $i$, the decryption key is $g^{-\Sigma_{j=1}^{n} d_{ij}}$ and for each participant $P_j$ the verification key is $g^{-\Sigma_{i=1}^{s} d_{ij}}$. By using only this subset of possible equations, unknowns are limited to only the $d_{ij}$ terms. If these can be found then the solution for the $x_{ij}$ terms is easy.

However, the solution for the $d_{ij}$ terms gives $n + s$ equations in $sn$ unknons. Since $n \geq 3$, we have $n + s < sn$ for $s \geq 2$. As was provided above with regard to data verification, for cases where $s = 1$ a verification key cannot be used. This therefore leaves one equations with $n \geq 3$ unknowns.

Further, since it is being assumed that the DLP for $g$ mod $p$ is easily solvable, the linear equations that result from the encrypted data may also be exploited in attacking the cryptosystem. Using the encrypted data doubles the number of variables but adds $sn + n$ equations, where the $sn$ equations are of the form $d_{ij} + p' x_{ij} = \log_g(y_{ij})$ and the n equation of the form $\sum_{i=1}^{s} x_{ij} = K$. The attacker will thus have $sn + n + s$ equations and $2sn$ unknowns. If $s = n = 3$ then the same number of equations and unknowns exist and for $s = 2$, $n = 3$, there are more equations than unknowns. However, in both of these cases, row reducing the coefficient matrix shows that the rank is less than the number of variables. Specifically, if $s = n = 3$ then there are 18 variables and the rank of the coefficient matrix is 12. If $s = 2$, $n = 3$ then there are 12 variables and the coefficient matrix has rank 8. Further, if $s = 1$, $n \geq 3$ then no verification key is used, so there are $n + 1$ equations and 2n unknowns.

Two strategies for attacking are therefore to decrease the number of assets considered, thereby decreasing the size of $s$, or for participants to collude, thereby decreasing the size of $n$.

For the first strategy, as indicated above, the system has multiple solutions for all $s \geq 1$ provided key validation is not used when $s = 1$. However, using only a subset of the assets, the verification keys are then rendered useless as well as the equations of the form $\sum_{i=1}^{s} x_{ij} = u_j$. This reduces to the case where there are $s'n$ + m' equations and $2s'n$ unknowns. For any $s'$ > 0 this still leaves more unknowns than equations.

For the second strategy, collusion, if $n$ - 1 participants collude the solution to recover the remaining participant's data is straightforward. However, an assumption with the protocols above is that the sharing of one's own data with $n$ - 2 participants to gain the data of the one other participant is too high a price. Otherwise the data could simply be shared publically from the start.

If $n$ - 2 participants colluded, the number of equations would be reduced to $4s$ + 2 and the number of unknowns would be only $4s$. However, the rank of the resulting coefficient matrix is $4s$ - 1. Thus $n$ - 1 participants must collude to compromise the system.

*Spurious Data Sets*

An iterative process can be used with a data set that is known to satisfy the encryption values, decryption values and verification keys to produce all spurious data sets, including but indistinguishable from the legitimate data set.

The implications of this are that spurious sets will almost always exist as long as the data for at least two participants are unknown. Therefore, the threshold of $n$ - 1 colluders is both necessary and sufficient to compromise the security of the protocol via collusion.

Further, changes to the original data set can be composed such that, in general, there are many data sets than can have the same encrypted values, verification keys, communal decryption keys and communal decryption values. This effectively makes distinguishing the valid data set from the spurious data sets virtually impossible.

In particular, suppose that for each $1 \leq i \leq s$, $1 \leq j \leq n$, the datum $x_{ij}$ is encrypted using the above protocols with an encryption key $d_{ij}$. If S is the set of all pairs $(x_{ij}, d_{ij})$, then for each subset $\{x_{ij}, x_{uj}, x_{iv}, x_{uv}\}$ of S, $L$ is any positive integer such that $L \leq \min\{x_{ij}, x_{uv}\}$. Then the set S', which replaces $\{(x_{ij}, d_{ij}), (x_{uj}, d_{uj}), (x_{iv}, d_{iv}), (x_{uv}, d_{uv})\}$ in S with $\{(x_{ij} - L, d_{ij} + p'L), (x_{uj} + L, d_{uj} - p'L), (x_{iv} + L, d_{iv} - p'L), (x_{uv} - L, d_{uv} + p'L)\}$ will have the same encryption values, communal decryption keys and verification keys as the original data set. Further, the sum of the values for participant $P_j$ and $P_v$ will remain the same.

The above may be proven by first providing the encryption value of S', which is $g^{d_{ij}+p'L}a^{x_{ij}-L} = g^{d_{ij}+p'L+p'x_{ij}-p'L} = g^{d_{ij}a^{x_{ij}}}$, which matches the encryption value for S.

*The $i^{th}$ decryption key of S' is* $g^{-d_{i1}-\cdots-d_{ij}-p'L-\cdots-d_{iv}+p'L-\cdots-d_{in}} = g^{-\sum_{j=1}^{n} d_{ij}}$. Again, this is identical to the $i^{th}$ decryption key of S. The $u^{th}$ decryption key is also identical.

For the verification key, the $j^{th}$ verification key of S' is $g^{d_{1j}+\cdots+d_{ij}+p'L-\cdots+d_{uj}-p'L+d_{sj}} = g^{\sum_{i=1}^{s} d_{ij}}$. Again, this is identical to the $j^{th}$ verification key of S. The $v^{th}$ verification key is also identical.

Further, the sum of the values of the $j^{th}$ party for S' is $x_{1j}$ + $\cdots$ + $x_{ij} - L + \cdots + x_{uj} + L + \cdots + x_{sj} = \sum_{i=1}^{s} x_{ij}$. Again, this is identical to the sum of the values of *the $j^{th}$* party of S. The values for the $v^{th}$ party are also identical.

**Multiple Round Applications**

As will be appreciated by those skilled in the art, other variations and applications of the COED protocol than those listed above are possible. One further variation allows for a layers approach to dependencies calculations for federated situational analysis and critical infrastructure protection. For example, this may be used in a situation where some of the participants are not even aware of their dependencies on particular assets, but rather only know of their dependence on services which themselves depend on the assets. For example, when companies are interdependent, company *A* may be dependent on company *B*, and company *B* may be dependent on critical infrastructure assets. In one embodiment it may be useful to know the extent to which both companies depend on the critical infrastructure. However, company *A* may be unaware of its own dependencies on such infrastructure.

Thus, to understand the dependencies and interdependencies of participants $P_1$, ..., $P_n$ on assets $A_1$, ..., $A_m$, a further iteration of the COED protocol may be used. In particular, the participants may not know of their own dependencies on the assets, but only know of their dependencies on services $S_1$,..., $S_L$. For each service $S_i$, the provider is one of the participants and will know the dependencies of the service on the assets.

In this case, the COED protocol could be implemented twice. In a first round, participants $P_1, ..., P_n$ encrypt their dependencies on the services $S_1,...,S_L$ and communally decrypt the total dependence on each service. In the second round, each participant that provides the services $S_1, ..., S_L$ encrypts the dependencies of their services on the assets $A_1,...,A_m$. Communal decryption thus yields the full dependences of the participants on the assets.

The above embodiment may be further modified by adding further layers of abstraction, for example by services depending on other services.

Further, the above could be modified for other applications instead of critical infrastructure. For example, a further variation allows for calculations of the statistical properties of a data set without the need to divulge the data itself. This may be useful in privacy preserving surveys.

Various rounds could be used to find higher order statistics on data in some cases. Thus, for example, once the protocol is used to calculate the sum of the data, and thus provide an average, each participant could be queried for the standard deviation based on the average. Specifically, in a first round, each participant provides a value $x_i$ and using the decryption, a public value of $\sum_{j=1}^{n} x_i$ can be found, which when divided by the number of participants, produces the average $\bar{x}$. Each participant $P_j$ can then calculate the deviation of their value from the average $(x_j - \bar{x})^2$. The results can then be encrypted using the COED protocol above and the sum of results, divided by the number of participants, produces the square of the standard deviation $\sigma^2 = \sum_{j=1}^{n}(x_i - \bar{x})^2/n$.

Further rounds could be used then for calculations such as a variance calculation. Here each party computes $\frac{(x_j-\bar{x})^3}{\sigma^3}$. Collectively decrypting the product of this round and diving by $n$ will yield the skewness of the distribution. Other examples are possible.

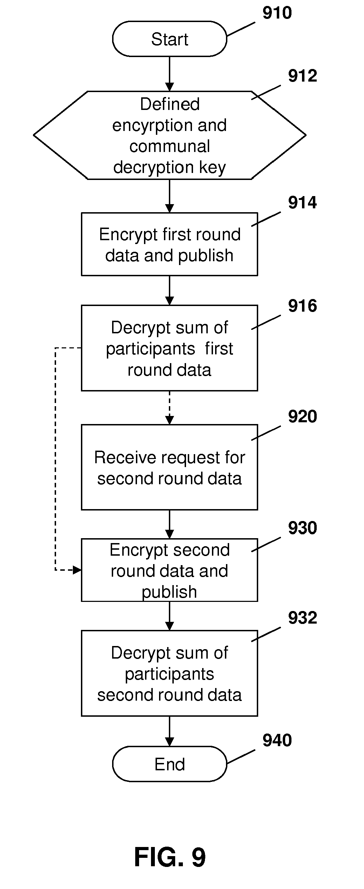

Reference is now made to **Figure 9,** which shows a simplified example of a multi-round COED process. In particular, the process starts at block **910** and has a precondition that the encryption and communal decryption key have already been created, for example using the process of **Figures 3** or **5** above.

The process proceeds to block **914** in which the first round data is encrypted and published. The process then proceeds to block **916** in which the sum (or product) of all participants' data is decrypted.

In one embodiment, the device may then receive a request for a second round data, as shown by block **920.** For example, if a standard deviation is desired based on an average calculated in the first round, the computing device desiring the standard deviation may make a request to all of the participants. From block **920** the process proceeds to block **930.**

In other embodiments, the second round may be predetermined and the computing device may proceed directly from block **916** to block **930.**

In block **930** the data for the second round is calculated and encrypted and the second round data can then be published to the other participants.

From block **930** the process proceeds to block **932** in which the sum (or product) of the second round can be decrypted.

If further rounds are required, then blocks **920** and/or **930** can be repeated.

From block **932** if no further rounds are required the process proceeds to block **940** and ends.

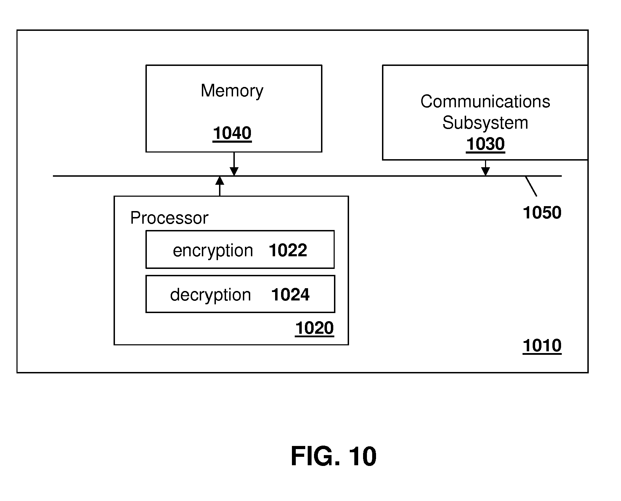

The above embodiments could be performed by a computing device or group of computing device. Reference is now made to Figure 10, which shows an example simplified computing device that a participant may use.

In particular, computing device 1010 may be a single device or group of devices and includes at least one processor 1020 to perform the processes and functions described above. Processor 1020 in the example of Figure 10 is a logical unit and could be comprised of one or more physical processors or chips. For example, the processor may provide all of the encryption functionality 1022 and decryption functionality 1024 in a single chip or the functionality may be distributed, for example, through a dedicated encryption and/or decryption processor.

Processor 1020 communicates with a memory 1040. Again, memory 1040 is logical and could be either located within computing device 1010 or distributed remotely from device 1010. Memory 1040 is configured to store various encryption and decryption keys as well as program code, that when executed performs the processes of the embodiments described above.

A communications subsystem 1030 allows computing device 1010 to communicate with other computing devices, such as for example the computing devices of other participants. Communication subsystem 1030 can be any wired or wireless communications subsystem and may allow communication either directly with the other competing devices or through any local or wide area network, such as for example the Internet.

The various components of computing device 1010 may communicate with each other, for example, through a bus 1050. However other possibilities for communication between the components exist.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

**Claims**

1. A method at a computing device for generating a communal decryption key among at least three participants to permit sharing of sensitive data, the method comprising:

   at a current participant:

   generating a secret value;
   adding the generated secret value to an in progress key to create a modified in progress key; and
   forwarding the modified in progress key to a subsequent participant in accordance with a predetermined ordering of participants,
   wherein said communal decryption key is derived upon performing said generating, adding and forwarding over a predetermined number of rounds.

2. The method of claim 1, wherein the in progress key is either received from a preceding participant, or if the in progress key is not received from a preceding participant, the in progress key is a large randomly generated number H.

3. The method of claim 2 wherein upon the completion of said predetermined number of rounds the large randomly generated number is removed from a received modified in progress key.

4. The method of any one of claims 1 to 3, wherein the secret value and the large randomly generated number are elements of multiplicative group G of integers modulo a prime number p.

5. The method of any one of claims 1 to 4, wherein an encryption key for one of said participants is computed by exponentiation using the sum of the secret values generated by the one of said participants over the number of rounds.

6. The method of claim 5, wherein a base value for said exponentiation is one of: a hash function H(t) or a primitive root g of multiplicative group G of integers modulo the prime p.

7. The method of any one of claims 1 to 6, wherein the predetermined ordering of participants ensures that the current participant receives or sends to every other participant at least once during said predetermined number of rounds.

8. A method at a computing device for sharing of sensitive data among at least three participants, the method comprising:

   at a current participant:

   constructing an exponent by mathematically combining a secret value of the current participant and the sensitive data;
   creating an encrypted value using the constructed exponent;
   publishing the encrypted value;
   finding a product of encrypted values of all said participants; and
   decrypting the product of encrypted values using a communal decryption key,

   wherein the communal decryption key includes secret values of all said participants.

9. The method of claim 8, further comprising, at the current participant generating an element z of the secret value d; adding the generated element of the secret value to an in progress key IPK to create a modified in progress key; and forwarding the modified in progress key to a subsequent participant in accordance with a predetermined ordering of participants; and wherein said communal decryption key is derived upon performing said generating, adding and forwarding over a predetermined number of rounds.

10. The method of claim 8 or claim 9, wherein the secret value of the current participant is either derived from a trusted third party or is a vector.

11. The method of any one of claims 8 to 10, wherein a base value for said exponent is one of: a hash function $H(t)$ or a primitive root $g$ of multiplicative group $G$ of integers modulo a prime $p$.

12. The method of any one of claims 8 to 11, wherein decrypting the product of encrypted values produces one of: a sum of the sensitive data of all said participants or a product of the sensitive data of all said participants.

13. The method of any one of claims 8 to 12, wherein the creating the encrypted value includes two rounds, wherein in a first round a first prime is encrypted if the current participant has data to send and second prime is encrypted if the current participant has no data to send; and
    wherein in a second round the data is encrypted if the first prime was encrypted in the first round and a null value is encrypted if the second prime was encrypted.

14. The method of any one of claims 8 to 13, further comprising, at said current participant:

    receiving a value $m$ that is infeasible to factor;
    using the value $m$ as a modulo for the constructing of the exponent;
    deriving a verification key by exponentiation using the secret value modulo $m$; and
    publishing the verification key.

15. The method of any one of claims 8 to 14, wherein multiple rounds of said constructing, creating, publishing, finding and decrypting are performed.

$E(x_1)$

$E(x_2)$

$E(x_3)$

$E(x_4)$

$E(x_5)$

Trusted Third
Party
**110**

## FIG. 1
(prior art)

210

212

214

$E(x_1)$

$E(x_2)$

$E(x_3)$

Shared Resource
220

$E(x_4)$

$E(x_5)$

218

216

**FIG. 2**

| Participant 310 | Participant 312 | Participant 314 | Participant 316 | Participant 318 |
|---|---|---|---|---|

Create
$IPK=H-z_{11}(mod\ p)$
330

IPK  332

$IPK=IPK-z_{12}(mod\ p)$
334

IPK  336

$IPK=IPK-z_{13}(mod\ p)$
338

IPK  340

$IPK=IPK-z_{14}(mod\ p)$
342

IPK  344

$IPK=IPK-z_{15}(mod\ p)$
346

IPK  350

$IPK=IPK-z_{21}(mod\ p)$
352

IPK  354

$IPK=IPK-z_{23}(mod\ p)$
356

IPK  358

$IPK=IPK-z_{25}(mod\ p)$
360

IPK  362

$IPK=IPK-z_{22}(mod\ p)$
364

IPK  366

$IPK=IPK-z_{24}(mod\ p)$
368

IPK  370

$IPK=IPK-H(mod\ p-1)$
372

**FIG. 3**

Participant **410**    Participant **412**    Participant **414**    Participant **416**    Participant **418**

Create $c_1$ **430**    Create $c_2$ **432**    Create $c_3$ **434**    Create $c_4$ **436**    Create $c_5$ **438**

Share $c_2$    **440**

Share $c_3$    **442**

Share $c_4$    **444**

Share $c_5$    **446**

Find

$$H(t)^D \prod_{j=1}^{5} c_j$$

**450**

# FIG. 4

Participant **510**  Participant **512**  Participant **514**  Participant **516**  Participant **518**

Create
IPK=H- $\overline{z_{11}}$(mod p)
**530**

IPK **532**

IPK=IPK-
$\overline{z_{12}}$(mod p)
**534**

IPK **536**

IPK=IPK-
$\overline{z_{13}}$(mod p)
**538**

IPK **540**

IPK=IPK-
$\overline{z_{14}}$(mod p)
**542**

IPK **544**

IPK=IPK-
$\overline{z_{15}}$(mod p)
**546**

IPK **550**

IPK=IPK-
$\overline{z_{21}}$(mod p)
**552**

IPK **554**

IPK=IPK-
$\overline{z_{23}}$(mod p)
**556**

IPK **558**

IPK=IPK-
$\overline{z_{25}}$(mod p)
**560**

IPK **562**

IPK=IPK-
$\overline{z_{22}}$(mod p)
**564**

IPK **566**

IPK=IPK-
$\overline{z_{24}}$(mod p)
**568**

IPK **570**

IPK=IPK-
H(mod p-1)
**572**

**FIG. 5**

Participant **610**  Participant **612**  Participant **614**  Participant **616**  Participant **618**

Create $\overline{c}_1$ **630**  Create $\overline{c}_2$ **632**  Create $\overline{c}_3$ **634**  Create $\overline{c}_4$ **636**  Create $\overline{c}_5$ **638**

Share $\overline{c}_2$ **640**

Share $\overline{c}_3$ **642**

Share $\overline{c}_4$ **644**

Share $\overline{c}_5$ **646**

Find

$$g^D \prod_{j=1}^{5} \overline{c}_j$$

**650**

## FIG. 6

FIG. 7

**FIG. 8**

**910** Start

**912** Defined encyrption and communal decryption key

**914** Encrypt first round data and publish

**916** Decrypt sum of participants first round data

**920** Receive request for second round data

**930** Encrypt second round data and publish

**932** Decrypt sum of participants second round data

**940** End

FIG. 9

**FIG. 10**

Europäisches
Patentamt

European
Patent Office

Office européen
des brevets

**EUROPEAN SEARCH REPORT**

Application Number

EP 14 16 6107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/041052 A1 (NEC EUROPE LTD [DE]; WESTHOFF DIRK [DE]; ARMKNECHT FREDERIK [DE]) 10 April 2008 (2008-04-10) <br> * abstract * <br> * page 1, line 2 - page 8, line 21 * <br> * figure 1 * <br> ----- | 1-4,7-12 | INV. <br> H04L9/00 <br> H04L9/08 |
| A | JYH-REN SHIEH ET AL: "Recommendation in the end-to-end encrypted domain", PROCEEDINGS OF THE 20TH ACM CONFERENCE ON INFORMATION AND KNOWLEDGE MANAGEMENT, CIKM 201, <br> 1 January 2011 (2011-01-01), page 915, XP055086909, <br> DOI: 10.1145/2063576.2063708 <br> ISBN: 978-1-45-030717-8 <br> * the whole document * <br> ----- | 1-15 | |
| A | EP 2 485 430 A2 (PALO ALTO RES CT INC [US]) 8 August 2012 (2012-08-08) <br> * abstract * <br> * paragraphs [0001] - [0016], [0026] - [0059] * <br> * figures 1-4 * <br> ----- | 1-15 | TECHNICAL FIELDS SEARCHED (IPC) <br><br> H04L |

The present search report has been drawn up for all claims

| Place of search | Date of completion of the search | Examiner |
|---|---|---|
| Munich | 17 June 2014 | Mariggis, Athanasios |

**ANNEX TO THE EUROPEAN SEARCH REPORT
ON EUROPEAN PATENT APPLICATION NO.**                EP 14 16 6107

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2014

| Patent document cited in search report | | Publication date | Patent family member(s) | | Publication date |
|---|---|---|---|---|---|
| WO 2008041052 | A1 | 10-04-2008 | CN | 101513007 A | 19-08-2009 |
| | | | EP | 2070288 A1 | 17-06-2009 |
| | | | ES | 2390902 T3 | 19-11-2012 |
| | | | JP | 4902744 B2 | 21-03-2012 |
| | | | JP | 2010506480 A | 25-02-2010 |
| | | | US | 2010098090 A1 | 22-04-2010 |
| | | | WO | 2008041052 A1 | 10-04-2008 |
| EP 2485430 | A2 | 08-08-2012 | EP | 2485430 A2 | 08-08-2012 |
| | | | JP | 2012165374 A | 30-08-2012 |
| | | | KR | 20120090812 A | 17-08-2012 |
| | | | US | 2012204026 A1 | 09-08-2012 |

EPO FORM P0459

For more details about this annex : see Official Journal of the European Patent Office, No. 12/82

**EP 2 800 298 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120204026 A, Shi